# EUROPEAN PATENT SPECIFICATION

(11) **EP 3 783 282 B1**
(45) Date of publication and mention of the grant of the patent: **11.10.2023**
(21) Application number: 20178009.5
(22) Date of filing: 03.06.2020
(51) Int. Cl.: F25B 43/00, B64D 13/06, B60H 1/00

(54) **VAPOR CYCLE MACHINE AVAILABILITY FOR HIGH IMPACT APPLICATIONS**
DAMPFZYKLUSMASCHINENVERFÜGBARKEIT FÜR ANWENDUNGEN MIT HOHER SCHLAGZÄHIGKEIT
DISPONIBILITÉ DE MACHINE À CYCLE DE VAPEUR POUR DES APPLICATIONS À IMPACT ÉLEVÉ

(30) Priority: 21.08.2019 US 201916547258
(43) Date of publication of application: 24.02.2021
(73) Proprietor: The Boeing Company, Arlington, VA 22202 (US)
(72) Inventor: TRENT, Michael L., CHICAGO, IL 60606-2016 (US); BROWN, Zachary G., CHICAGO, IL 60606-2016 (US); MEGCHIANI, Chetan B., CHICAGO, IL 60606-2016 (US)
(74) Representative: Plasseraud IP

(56) References cited:
- CN-A- 103 673 421
- JP-A- H08 178 474
- JP-A- 2012 141 099
- JP-A- 2017 020 753
- US-A- 5 181 388
- US-A1- 2005 210 910
- US-A1- 2015 345 821

## Description

### BACKGROUND INFORMATION

### Field

This disclosure relates generally to the field of vapor cycle machines and more particularly to a bypass system for a vapor cycle machine.

### Background

Aircraft, as well as other transportation and general heating ventilation and air conditioning (HVAC) systems, used in both commercial and private settings, employ vapor cycle machines. Modern commercial aircraft may feature a highly integrated air conditioning and pressurization system. Commonly, traditional air cycle based packs are utilized as a principal cooling plant for the airplane interiors. In some adaptations, this can be augmented by centralized or distributed smaller cooling units which are commonly a vapor cycle machine (VCM). In a VCM, work performed on a refrigerant enables air to ultimately be cooled in a heat exchanger (refrigerant evaporator). In some aircraft applications, the principal cooling plant can be entirely vapor cycle based. Given the transportation importance of environmental control, high reliability and availability of VCMs is needed to support transportation applications. For one example, in one aircraft application, an air cycle pack is augmented by a Supplemental Cooling System (SCS), a series of vapor cycle packs, that chill a coolant which is then circulated throughout the airplane. This coolant is used in food and beverage cooling for passenger service but also for cooling cabin and/or cargo recirculated air. The cooled recirculation air serves to cool the cabin and other areas of the airplane. As a result, the SCS function is highly important to airplane operations.

VCMs typically have component(s) providing a refrigerant filtration and drying function (FDF). These components normally have design life limitations and require maintenance repair or replacement as the unit accumulates operating hours or as the components become clogged. A failure in or wear out of FDF components may impact overall operation of the vapor cycle machine and in aircraft applications can also impact aircraft dispatch or operation. FDF components remove moisture and contaminants in refrigerant often generated by system wear or introduced in the system during manufacture or maintenance. Pressure loss increases and flow decreases typically with age and number of operating hours. Also, filter drier function life can decrease in severe conditions such as high cooling loads (hot air temperatures and high compressor speeds). If the filter wears (plugged or clogged), efficiency of the refrigeration system in typical designs, may be reduced or the system may need to be turned off. Loss of VCM air cooling capability on an aircraft may cause a flight to be delayed or cancelled.

US 2005/210910 A1, in accordance with its abstract, states a cooling system for a commercial aircraft galley, where heat is transferred from a galley food cart by a point-of-use heat exchange system to a liquid cooled condenser. Liquid coolant for the liquid cooled condenser is circulated in a liquid coolant loop to a heat exchanger expelling heat for cooling the liquid coolant. The liquid coolant may be water or a mixture of water and glycol. A flow of cooling air from a heat exchanger cooled by the liquid cooled condenser is cycled through an air over system, through an air through system, or from a thermal convection air cooling system providing at least one cooled galley food cart surface to provide cooling. Heat may be transferred from a plurality of galley food carts to the circulating liquid coolant.

US 2015/345821 A1, in accordance with its abstract, states a heating, ventilation, and air conditioning (HVAC) system of a building that includes a refrigerant loop. A monitoring system for the HVAC system includes a monitoring device installed at the building. The monitoring device is configured to measure a first temperature of refrigerant in a refrigerant line located between a filter-drier of the refrigerant loop and an expansion valve of the refrigerant loop. The monitoring system includes a monitoring server, located remotely from the building. The monitoring server is configured to receive the first temperature and, in response to the first temperature being less than a threshold, generate a refrigerant line restriction advisory. The monitoring server is configured to, in response to the refrigerant line restriction advisory, selectively generate an alert for transmission to at least one of a customer and an HVAC contractor.

CN 103 673 421 A, in accordance with its abstract, states the invention relates to a refrigerating system with dual function backup and a backup method. The refrigerating system with dual function backup comprises a steam compression refrigeration circulation line, a hot gas bypass control branch, a first backup branch and a second backup branch. The steam compression refrigeration circulation line comprises a compressor, a condenser, a liquid storage device, a first drying filter, an evaporator and a gas-liquid separator, wherein the compressor, the condenser, the liquid storage device, the first drying filter, the evaporator and the gas-liquid separator are sequentially connected in a circulating mode. The hot gas bypass control branch is arranged between the compressor and the evaporator. The first backup branch is arranged between the liquid storage device and the evaporator. The second backup branch is arranged between the compressor and a third electronic control valve. The second backup branch and the first backup branch share the third electronic control valve and a fifth stop valve. The reliability of the unit is effectively improved through arrangement of the first backup branch and the second backup branch, and the refrigerating system has the advantages of being simple in design and convenient to isolate and maintain.

JP 2012 141099 A, in accordance with its abstract, states the apparatus has a bypass circuit that is parallelly provided with respect to the dryer which adsorbs and removes the moisture content, and foreign material in the refrigerant circuit. The line-pressure loss of the bypass circuit is larger than the pressure loss at the time of the new article of the dryer, and smaller than the maximum-allowable-working-pressure loss. A strainer is provided in the bypass circuit. A stop valve is provided in the upstream and downstream of the dryer.

JP H08 178474 A, in accordance with its abstract, states a freezer is provided with a timer for measuring an operation time starting from the operation, an operation time comparing means for use in comparing an operating timer measured by the timer with a predetermined time, and further solenoid valves for use in controlling a flow passage of each of a major circuit and a bypassing circuit in response to a result obtained by the operation time comparing means.

JP 2017 020753 A, in accordance with its abstract, states the refrigerator has a heat radiator which is provided in the places of the machine room of a box, a side surface, a top surface, and a back surface.

A dew condensation suppression device is provided in the opening edge of the box. A first dryer is provided upstream of first pressure reduction portion and a second dryer is provided upstream of a second pressure reduction portion. A cooler is provided between the first and second pressure reduction portions and compressor. Moisture absorption ability of second dryer is made lower than first dryer.

### SUMMARY

A bypass system for a vapor cycle machine is provided as defined in claim 1.

A method for operation of a vapor cycle machine is provided as defined in claim 15.

### BRIEF DESCRIPTION OF THE DRAWINGS

The features, functions, and advantages that have been discussed can be achieved independently in various implementations or may be combined in yet other implementations further details of which can be seen with reference to the following description and drawings.
FIG. 1 is a representation of an exemplary vapor cycle machine, not encompassed by the wording of the appended claims, with a FDF bypass system;
FIG. 2 is a detailed block diagram representation of a FDF bypass system for implementation in a vapor cycle machine;
FIG. 3 is a detailed block diagram view of a manual bypass valve for use in a FDF bypass system for implementation in a vapor cycle machine;
FIG. 4 is a flow chart of a method for operation of a vapor cycle machine with a FDF bypass system.

### DETAILED DESCRIPTION

The ability to sustain vapor cycle machine (VCM) operation with failed or degraded FDF components (beyond a normal maintenance cycle) is valuable. For aircraft, this can enable continued aircraft operation until maintenance can be performed at a more convenient time or place. For example, simple reconfiguration could allow aircraft operations for a time period, such as 10 days, until an effective repair or VCM replacement can occur. In transportation use, FDF components commonly require the VCM to be evacuated of refrigerant. This and equipment/tooling requirements typically require that VCM service occur in a shop environment. The implementations disclosed herein are demonstrated in aircraft applications; however, the concept is adaptable to other applications where cooling is critical, when extended / continuous operation of VCMs are required, and/or when space, weight, cost, or other constraints limit VCM or VCM component sizes. VCMs can be used but not limited to refrigeration, cooling, or heat pump applications. It is noted that bypass of the refrigerant filtration and drying function (FDF) can result in further machine wear and may result in additional component failures affecting repair costs. This is deemed an acceptable trade for increased availability as component wear is a prevalent cause of FDF wear out or failure. The implementation described herein provide a bypass system having a bypass loop and valve on a vapor cycle machine that allows for continuous operation even during critical filter dryer end of life or failure conditions. The implementations disclosed allow the vapor cycle machine to still operate, preventing shut down of supported systems, such as air conditioning (HVAC) systems used in commercial or private settings, aircraft food refrigeration or cabin cooling, preventing or minimizing airplane flight delays or cancellation of flights, and spoilage of food and/or beverages. This can yield maintenance efficiencies, operational efficiencies, cost savings, and customer satisfaction. While described herein for use with aircraft systems, the implementations can be used not only in the aerospace industry, but also in home and industrial applications (vapor cycle refrigeration systems). The bypass system described herein can operate manually or automatically with electromechanical valve and control components.

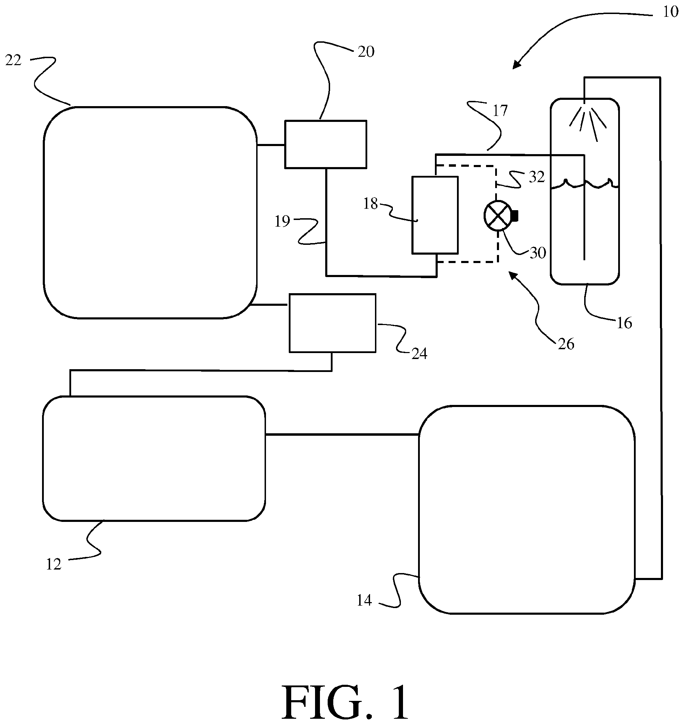

Referring to the drawings, FIG. 1 shows one typical example of a vapor cycle machine 10 for refrigeration having a compressor 12 feeding working fluid through a condenser 14 to a receiving tank 16 which stores the working fluid. Liquid refrigerant is withdrawn from the receiving tank 16 and routed with an inlet line 17 to a refrigerant filter/dryer 18. Liquid refrigerant flows from the refrigerant filter/dryer 18 to an outlet line 19 connected through an expansion valve 20 to an evaporator 22. A temperature sensing controller 24 controls flow of the working fluid through the evaporator to provide the desired refrigeration (evaporation) temperature (superheat control). The now gaseous working fluid is then returned to the compressor 12. A bypass system 26 allows rerouting of the working fluid flow partially or completely around the refrigerant filter/dryer 18. The refrigerant filter/dryer 18 is the FDF component addressed in the current implementation but the bypass system 26 may be applied to various other FDF components in similar vapor cycle machines.

In a first example implementation, not encompassed by the wording of the appended claims, a bypass valve 30 is positioned in the bypass line 32 of bypass system 26 as shown in FIG.1. In this configuration, opening of the bypass valve 30 results in partial bypass of the flow of liquid refrigerant reducing the load on the refrigerant filter/dryer 18 but with continuing flow through the refrigerant filter/dryer unless the refrigerant filter dryer becomes fully plugged. In that condition, all flow is bypassed. Without bypass, a VCM commonly will be turned off due to excessive pressure when the FDF wears to the point of terminal pressure loss.

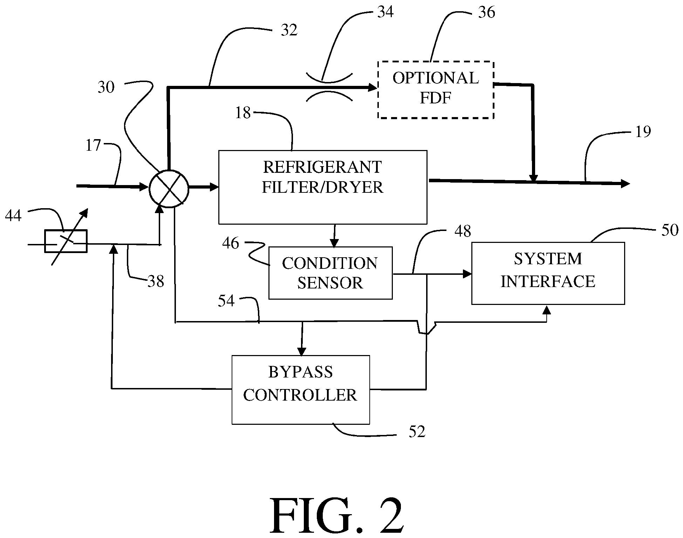

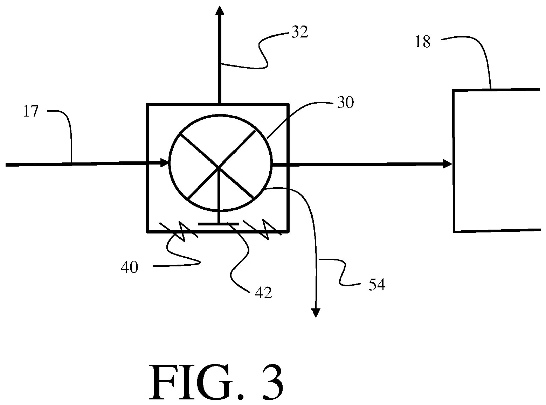

Details of the bypass system 26 are seen in FIG. 2. A bypass valve 30 receiving flow from the inlet line 17 is configured to route liquid refrigerant into a bypass line 32, rejoining the outlet line 19 downstream of the refrigerant filter/dryer 18. As will be described in greater detail, the bypass valve 30 routes all or a portion of the flow of liquid refrigerant from the refrigerant filter/dryer 18 in response to a requirement for a bypass condition. An orifice 34 is positioned in the bypass line 32 to limit flow in a manner consistent with normal flow through the refrigerant filter/dryer 18. Secondary FDF components 36, such as a reduced life or lower capacity filter/dryer, are positioned in the bypass line 32 to maintain a filter/dryer function for liquid refrigerant flowing in the bypass condition. A combination of orifice 34 and FDF components 36 is matched to provide comparable flow of liquid refrigerant in the bypass line to the normal flow condition through the refrigerant filter/dryer 18. Bypass valve 30 may be a manual valve which is operated by a mechanic or technician based on a requirement for a bypass condition. Alternatively, bypass valve 30 may be an automatic electromechanical valve operated by a solenoid upon receipt of an electrical bypass condition signal 38. A hydraulically operated valve may also be employed for either manual or automatic operation. The bypass valve 30 reroutes all or a portion of the flow from the inlet line 17 using, for example, a three port ball valve or a positionable stem and multiseat valve. As seen in FIG. 3 for a mechanical valve implementation of bypass valve 30, a physical indicator to show the manual by-pass has been activated, such as a label or plastic rupturable retention feature 40 that is broken, cut, or torn for access to, or upon activation of, the manual valve operator 42 is provided in certain implementations. An electromechanical version of bypass valve 30 may be manually operated by a switch or switch rheostat 44, providing the bypass condition signal 38 as seen in FIG. 2, for full flow diversion or for controllable partial flow diversion.

As shown in FIG. 2, a condition sensor 46 is connected to the refrigerant filter/dryer 18 providing a condition status signal 48 indicative of refrigerant filter/dryer condition to a system interface 50. The condition status signal 48 and system interface 50 is a physical indicator for end of life of the refrigerant filter/dryer 18. In some implementations, the condition status signal 48 is derived from sensed states within the system (pressures, temperatures, compressor speeds, valve positions) or through other parameters such as number of operating hours since last service, output temperatures vs time, etc. A bypass controller 52, connected to receive the condition status signal 48, is operable to provide the bypass condition signal 38 responsive to the condition status signal 48 to operate bypass valve 30. At terminal life of the refrigerant filter/dryer 18 the bypass controller 52 issues a bypass condition signal for a fully open condition of bypass valve 30. In alternative implementations, the bypass controller 52 modulates the bypass condition signal 38 to operate the bypass valve 30 to gradually, incrementally, divert flow into the bypass line 32 as wear continues in the refrigerant filter/dryer 18. When the full open valve position is reached, bypass controller 52 could determine to fully shutdown the VCM or allow the unit to continue to operate until it fails or it is replaced. Shutdown of a VCM typically results in loss of VCM air cooling to the particular application (e.g. food chilling or cabin recirculation air cooling is lost). Bypass operation can retain VCM performance until repair or maintenance can occur. Performance is limited primarily by the wear state of the overall machine. Alternatively, the position of bypass valve 30 is modulated by the bypass controller 52 to continue flow and allow the refrigerant filter/dryer 18 to operate until it fails completely.

The system interface 50 connected to the condition sensor 46 and employing lights or other displayed digital warnings (e.g. Filter /drier is 50% life, at 100% life, has 2 days remaining of by-pass operation) to provide indication to a user, such as a pilot, mechanic or automated maintenance monitoring system, of the operating condition of the refrigerant filter/dryer 18 responsive to the condition status signal 48. A position status signal 54 from the bypass valve 30 is provided to the system interface 50 and is displayed to indicate operation or position of the valve. In certain implementations, the position status signal provides feedback to the bypass controller 52.

In certain implementations, dynamic life extension of the refrigerant filter/dryer 18 is obtained by automated operation of the bypass valve 30. When the vapor cycle machine 10 is operating at conditions where moisture or particulate risks are low (low power, stable refrigerant) the refrigerant filter/dryer 18 is by-passed automatically through operation of bypass valve 30. When conditions change, full refrigerant filter/dryer function can be restored by positioning the bypass valve 30 for no bypass flow. This may serve to extend the life of the filter function of the filter/drier. Bypass function is determined and controlled by the bypass controller 52 by sensing states within the system (pressures, temperatures, compressor speeds, valve positions or through other parameters like number of operating hours since last service, output temperatures vs time, etc.) provided by the condition sensor 46 or other operational sensors in the vapor cycle system or aircraft.

The disclosed implementations enable continued operation of the vapor cycle machine 10 for a limited time period until repair of the refrigerant filter/dryer 18 can be scheduled and accomplished (e.g. like 10 day MEL in the Aviation Industry). In a transport application, a vehicle could be used and then ferried to a maintenance station at a convenient time. Performance during the time limited period of bypass operation, depending on original refrigerant filter/drier sizing, would only be degraded slightly. Additionally, with automated control and modulation of the bypass valve 30, enhanced benefits such as increased refrigerant filter/dryer longevity may be obtained. Some level of filtration can also be maintained up to the point of full by-pass. Controlled bypass, particularly with added FDF components in the bypass line, can maintain the vapor cycle machine 10 at FDF terminal characteristics (pressure drop) to minimize further systems degradation and maximum level of FDF function.

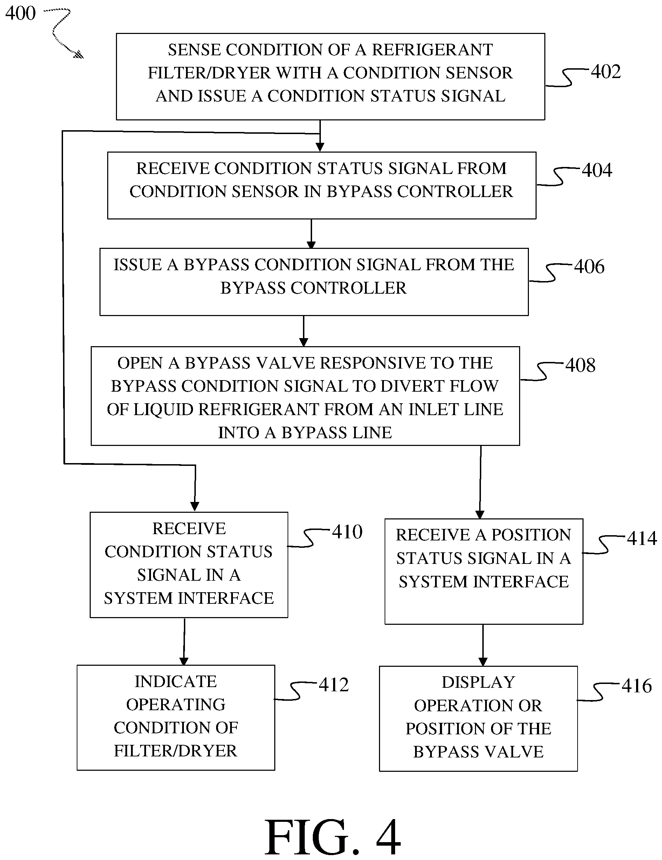

The implementations disclosed provide a method 400 for operation of a vapor cycle machine 10 as shown in FIG. 4. Condition of a refrigerant filter/dryer 18 is sensed with a condition sensor 46, step 402. A condition status signal 48 indicative of refrigerant filter/dryer condition is received from the condition sensor 46 in a bypass controller 52, step 404. A bypass condition signal 38 is issued from the bypass controller, step 406. A bypass valve 30 is opened responsive to the bypass condition signal with the bypass valve configured to divert flow of liquid refrigerant from an inlet line 17 into a bypass line 32, step 408, the bypass line connected from the inlet line 17 of the refrigerant filter/dryer to an outlet line 19 from the refrigerant filter/dryer. Opening of the bypass valve may be accomplished by modulating the bypass condition signal for full flow diversion or for controllable partial flow diversion by the bypass valve. The condition status signal is also received in a system interface 50, step 410. The system interface displays lights or other digital to provide indication to a user of the operating condition of the refrigerant filter/dryer 18, step 412. A position status signal 54 is received from the bypass valve 30 in the system interface 50, step 414. The system interface 50 then displays the position status signal to indicate operation or position of the bypass valve to the user, step 416.

## Claims

1. A bypass system (26) for a vapor cycle machine (10), the system comprising:
a refrigerant filter/dryer (18) receiving a flow of liquid refrigerant from an inlet line (17) and discharging the liquid refrigerant to an outlet line (19);
a bypass line (32) interconnecting the inlet line (17) and the outlet line (19);
a bypass valve (30) positioned upstream the refrigerant filter/dryer (18) and configured to divert a portion or all of the flow of liquid refrigerant from the inlet line (17) into the bypass line (32);
a flow limiting orifice (34) positioned in the bypass line (32);
one or more secondary filter dryer function (FDF) components (36) positioned in the bypass line (32), to maintain a filter/dryer function for the liquid refrigerant flowing in a bypass condition, downstream the flow limiting orifice (34), the one or more secondary filter dryer function (FDF) components (36) having a lower capacity compared to the refrigerant filter/dryer (18) and a combination of the flow limiting orifice (34) and the one or more secondary filter dryer function (FDF) components (36) being configured to provide comparable flow of the liquid refrigerant flowing in the bypass line (32) to normal flow condition defined by the refrigerant filter/dryer (18); and
a condition sensor (46) providing a condition status signal (48) indicative of refrigerant filter/dryer (18) physical condition of terminal life, said bypass valve (30) operable responsive to the condition status signal (48).

2. The bypass system (26) as defined in claim 1, wherein the one or more FDF components (36) comprise a reduced life or lower capacity filter/dryer.

3. The bypass system (26) as defined in claims 1 or 2, further comprising a system interface (50).

4. The bypass system (26) as defined in any of claims 1 to 3, wherein said bypass valve (30) is a manual valve.

5. The bypass system (26) as defined in claim 4, further comprising a rupturable retention feature (40) that is broken, cut, or torn for access to, or upon activation of, a manual valve operator (42).

6. The bypass system (26) as defined in any of claims 1 to 3, wherein said bypass valve (30) is operated electromechanically responsive to a bypass condition signal (38).

7. The bypass system (26) as defined in claim 6, further comprising a switch or switch rheostat (44) providing the bypass condition signal (38).

8. The bypass system (26) as defined in claim 6, wherein the condition sensor (46) is connected to the refrigerant filter/dryer (18) providing the condition status signal (48) indicative of refrigerant filter/dryer (18) physical condition of terminal life.

9. The bypass system (26) as defined in claim 8, further comprising a bypass controller (52) receiving the condition status signal (48), said bypass controller (52) operable responsive to the condition status signal (48) to provide the bypass condition signal (38) to operate the bypass valve (30).

10. The bypass system (26) as defined in claim 9, wherein the bypass controller (52) operates at terminal life of the refrigerant filter/dryer to provide a bypass condition signal (38) to a fully open condition of the bypass valve (30).

11. The bypass system (26) as defined in claim 9, wherein the bypass controller (52) modulates the bypass condition signal (38) to operate the bypass valve (30) to incrementally divert flow into the bypass line (32).

12. The bypass system (26) as defined in any of claims 1 to 11, further comprising a system interface (50) having lights or other displayed digital warnings responsive to the condition status signal (48) to provide indication to a user of the condition.

13. The bypass system (26) as defined in claim 12, wherein the bypass valve (30) provides a position status signal (54) and the system interface (50) provides an indication of bypass valve position responsive to the position status signal (54).

14. The bypass system (26) as defined in claim 9, wherein the bypass valve (30) provides a position status signal (54) as feedback to the bypass controller (52).

15. A method for operation of a vapor cycle machine (10) comprising a bypass system (26) of claim 1, the method comprising:
sensing condition of the refrigerant filter/dryer (18) with the condition sensor (46);
receiving the condition status signal (48) indicative of refrigerant filter/dryer (18) physical condition of terminal life from the condition sensor (46) in a bypass controller (52);
issuing a bypass condition signal (38) from the bypass controller (52); and
opening the bypass valve (30) responsive to the bypass condition signal (38).

## Patentansprüche

1. Umgehungssystem (26) für eine Dampfzyklusmaschine (10), wobei das System aufweist:
einen Kältemittel-Filter/Trockner (18), der einen Fluss flüssigen Kältemittels aus einer Einlassleitung (17) empfängt und das flüssige Kältemittel zu einer Auslassleitung (19) entlässt;
eine Umgehungsleitung (32), die die Einlassleitung (17) und die Auslassleitung (19) verbindet;
ein Umgehungsventil (30), das stromauf des Kältemittel-Filters/Trockners (18) angeordnet ist und konfiguriert ist, einen Teil oder den gesamten Fluss flüssigen Kältemittels von der Einlassleitung (17) in die Umgehungsleitung (32) umzuleiten;
eine Durchflussbegrenzungsöffnung (34), die in der Umgehungsleitung (32) angeordnet ist;
eine oder mehrere sekundäre Filter-Trockner-Funktion (FDF) Komponenten (36), die in der Umgehungsleitung (32) angeordnet sind, um eine Filter/Trockner-Funktion für das flüssige Kältemittel, das in einer Umgehungsbedingung fließt, aufrechtzuerhalten, stromab der Durchflussbegrenzungsöffnung (34),
die eine oder mehreren sekundären Filter-Trockner-Funktion (FDF) Komponenten (36) eine geringere Kapazität im Vergleich zu dem Kältemittel-Filter/Trockner (18) haben und wobei eine Kombination aus der Durchflussbegrenzungsöffnung (34) und der einen oder den mehreren sekundären Filter-Trockner-Funktion (FDF) Komponenten (36) konfiguriert ist, einen Durchfluss des in der Umgehungsleitung (32) fließenden flüssigen Kältemittels bereitzustellen, der vergleichbar mit einer von dem Kältemittel-Filter/Trockner (18) definierten normalen Durchflussbedingung ist; und
einen Bedingungssensor (46), der ein Bedingungszustandssignal (48) bereitstellt, das eine physikalische Bedingung endender Lebensdauer des Kältemittel-Filters/Trockners (18) angibt, wobei das Umgehungsventil (30) als Antwort auf das Bedingungszustandssignal betätigbar ist.

2. Umgehungssystem (26) nach Anspruch 1, wobei die eine oder mehreren FDF-Komponenten (36) einen Filter/Trockner mit reduzierter Lebensdauer oder geringerer Kapazität aufweisen.

3. Umgehungssystem (26) nach Anspruch 1 oder 2, ferner aufweisend eine Systemschnittstelle (50).

4. Umgehungssystem (26) nach einem der Ansprüche 1 bis 3, wobei das Umgehungsventil (30) ein manuelles Ventil ist.

5. Umgehungssystem (26) nach Anspruch 4, ferner aufweisend ein trennbares Beibehaltungsmerkmal (40), das für einen Zugang zu oder bei Aktivieren einer manuellen Ventilbedienung (42) gebrochen, geschnitten oder gerissen wird.

6. Umgehungssystem (26) nach einem der Ansprüche 1 bis 3, wobei das Umgehungsventil (30) als Antwort auf ein Umgehungsbedingungssignal (38) elektromechanisch betätigt wird.

7. Umgehungssystem (26) nach Anspruch 6, ferner aufweisend einen Schalter oder einen Schalter-Rheostat (44), der das Umgehungsbedingungssignal (38) bereitstellt.

8. Umgehungssystem (26) nach Anspruch 6, wobei der Bedingungssensor (46) mit dem Kältemittel-Filter/Trockner (18) verbunden ist und das Bedingungszustandssignal (48) bereitstellt, das die physikalische Bedingung endender Lebensdauer des Kältemittel-Filters/Trockners (18) angibt.

9. Umgehungssystem (26) nach Anspruch 8, ferner aufweisend eine Umgehungssteuerung (52), die das Bedingungszustandssignal (48) empfängt, wobei die Umgehungssteuerung (52) als Antwort auf das Bedingungszustandssignal (48) betätigbar ist, um das Umgehungsbedingungssignal (38) bereitzustellen, um das Umgehungsventil (30) zu betätigen.

10. Umgehungssystem (26) nach Anspruch 9, wobei die Umgehungssteuerung (52) am Ende der Lebensdauer des Kältemittel-Filters/Trockners tätig wird, um ein Umgehungsbedingungssignal (38) für eine vollständig offene Bedingung des Umgehungsventils (30) bereitzustellen.

11. Umgehungssystem (26) nach Anspruch 9, wobei die Umgehungssteuerung (52) das Umgehungsbedingungssignal (38) moduliert, um das Umgehungsventil (30) zu betätigen, einen Fluss allmählich in die Umgehungsleitung (32) umzuleiten.

12. Umgehungssystem (26) nach einem der Ansprüche 1 bis 11, ferner aufweisend eine Systemschnittstelle (50) mit Lichtern oder anderen dargestellten digitalen Warnungen als Antwort auf das Bedingungszustandssignal (48), um einem Nutzer eine Angabe der Bedingung bereitzustellen.

13. Umgehungssystem (26) nach Anspruch 12, wobei das Umgehungsventil (30) ein Positionszustandssignal (54) bereitstellt, und wobei die Systemschnittstelle (50) als Antwort auf das Positionszustandssignal (54) eine Angabe der Umgehungsventilposition bereitstellt.

14. Umgehungssystem (26) nach Anspruch 9, wobei das Umgehungsventil (30) ein Positionszustandssignal (54) als Rückmeldung zu der Umgehungssteuerung (52) bereitstellt.

15. Verfahren zum Betreiben einer Dampfzyklusmaschine (10), die ein Umgehungssystem (26) nach Anspruch 1 aufweist, wobei das Verfahren aufweist:
Detektieren einer Bedingung des Kältemittel-Filters/Trockners (18) mithilfe des Bedingungssensors (46);
Empfangen des Bedingungszustandssignals (48), das eine physikalische Bedingung endender Lebensdauer des Kältemittel-Filters/Trockners (18) angibt, aus dem Bedingungssensor (46) in einer Umgehungssteuerung (52);
Ausgeben eines Umgehungsbedingungssignals (38) aus der Umgehungssteuerung (52); und
Öffnen des Umgehungsventils (30) als Antwort auf das Umgehungsbedingungssignal (38).

## Revendications

1. Système de dérivation (26) pour une machine à cycle de vapeur (10), le système comprenant :
un filtre/déshydrateur de fluide frigorigène (18) recevant un écoulement de fluide frigorigène liquide à partir d'une conduite d'entrée (17) et évacuant le fluide frigorigène liquide vers une conduite de sortie (19) ;
une conduite de dérivation (32) raccordant la conduite d'entrée (17) et la conduite de sortie (19) ;
une soupape de dérivation (30) positionnée en amont du filtre/déshydrateur de fluide frigorigène (18) et configurée pour dévier une partie de ou tout l'écoulement de fluide frigorigène liquide à partir de la conduite d'entrée (17) dans la conduite de dérivation (32) ;
un orifice de limitation d'écoulement (34) positionné dans la conduite de dérivation (32) ;
un ou plusieurs éléments à fonction de filtre/déshydrateur (FDF) secondaires (36) positionnés dans la conduite de dérivation (32), pour maintenir une fonction de filtre/déshydrateur pour le fluide frigorigène liquide s'écoulant dans un état de dérivation, en aval de l'orifice de limitation d'écoulement (34),
les un ou plusieurs éléments à fonction de filtre/déshydrateur (FDF) (36) secondaires ayant une moindre capacité par rapport au filtre/déshydrateur de fluide frigorigène (18) et une combinaison de l'orifice de limitation d'écoulement (34) et des un ou plusieurs éléments à fonction de filtre/déshydrateur (FDF) (36) secondaires étant configurée pour fournir un écoulement comparable du fluide frigorigène liquide s'écoulant dans la conduite de dérivation (32) à un état d'écoulement normal défini par le filtre/déshydrateur de fluide frigorigène (18) ; et
un capteur d'état (46) fournissant un signal de statut d'état (48) indiquant un état physique de filtre/déshydrateur de fluide frigorigène (18) de fin de durée de vie, ladite soupape de dérivation (30) pouvant être actionnée en réponse au signal de statut d'état (48).

2. Système de dérivation (26) selon la revendication 1, dans lequel les un ou plusieurs éléments FDF (36) comprennent un filtre/déshydrateur à durée de vie réduite ou de moindre capacité.

3. Système de dérivation (26) selon les revendications 1 ou 2, comprenant en outre une interface système (50).

4. Système de dérivation (26) selon l'une quelconque des revendications 1 à 3, dans lequel ladite soupape de dérivation (30) est une soupape manuelle.

5. Système de dérivation (26) selon la revendication 4, comprenant en outre un organe de retenue pouvant être rompu (40) qui est cassé, coupé, ou déchiré pour un accès à, ou lors du déclenchement de, un actionneur de soupape manuelle (42).

6. Système de dérivation (26) selon l'une quelconque des revendications 1 à 3, dans lequel ladite soupape de dérivation (30) est actionnée électromécaniquement en réponse à un signal d'état de dérivation (38).

7. Système de dérivation (26) selon la revendication 6, comprenant en outre un commutateur ou rhéostat de commutateur (44) fournissant le signal d'état de dérivation (38).

8. Système de dérivation (26) selon la revendication 6, dans lequel le capteur d'état (46) est connecté au filtre/déshydrateur de fluide frigorigène (18) fournissant le signal de statut d'état (48) indiquant un état physique de filtre/déshydrateur de fluide frigorigène (18) de fin de durée de vie.

9. Système de dérivation (26) selon la revendication 8, comprenant en outre un dispositif de commande de dérivation (52) recevant le signal de statut d'état (48), ledit dispositif de commande de dérivation (52) pouvant être actionné en réponse au signal de statut d'état (48) pour fournir le signal d'état de dérivation (38) pour actionner la soupape de dérivation (30).

10. Système de dérivation (26) selon la revendication 9, dans lequel le dispositif de commande de dérivation (52) est actionné à la fin de la durée de vie du filtre/déshydrateur de fluide frigorigène pour fournir un signal d'état de dérivation (38) jusqu'à un état entièrement ouvert de la soupape de dérivation (30).

11. Système de dérivation (26) selon la revendication 9, dans lequel le dispositif de commande de dérivation (52) module le signal d'état de dérivation (38) pour actionner la soupape de dérivation (30) pour dévier progressivement l'écoulement dans la conduite de dérivation (32).

12. Système de dérivation (26) selon l'une quelconque des revendications 1 à 11, comprenant en outre une interface système (50) ayant des voyants ou d'autres avertissements numériques affichés en réponse au signal de statut d'état (48) pour fournir une indication à un utilisateur de l'état.

13. Système de dérivation (26) selon la revendication 12, dans lequel la soupape de dérivation (30) fournit un signal de statut de position (54) et l'interface système (50) fournit une indication d'une position de soupape de dérivation en réponse au signal de statut de position (54).

14. Système de dérivation (26) selon la revendication 9, dans lequel la soupape de dérivation (30) fournit un signal de statut de position (54) en tant que retour au dispositif de commande de dérivation (52).

15. Procédé pour l' actionnement d'une machine à cycle de vapeur (10) comprenant un système de dérivation (26) selon la revendication 1, le procédé comprenant :
la détection d'un état du filtre/déshydrateur de fluide frigorigène (18) avec le capteur d'état (46) ;
la réception du signal de statut d'état (48) indiquant un état physique de filtre/déshydrateur de fluide frigorigène (18) de fin de durée de vie à partir du capteur d'état (46) dans un dispositif de commande de dérivation (52) ;
l'émission d'un signal d'état de dérivation (38) à partir du dispositif de commande de dérivation (52) ; et
l'ouverture de la soupape de dérivation (30) en réponse au signal d'état de dérivation (38).
